# EUROPEAN PATENT SPECIFICATION

(11) **EP 3 548 281 B1**
(45) Date of publication and mention of the grant of the patent: **02.09.2020**
(21) Application number: 17818379.4
(22) Date of filing: 01.12.2017
(51) Int. Cl.: B32B 27/08, B32B 27/30, B32B 27/32

(54) **MULTILAYER FILMS**
MEHRSCHICHTIGE FOLIEN
FILMS MULTI-COUCHES

(30) Priority: 01.12.2016 US 201662428830 P
(43) Date of publication of application: 09.10.2019
(73) Proprietor: DOW GLOBAL TECHNOLOGIES LLC, Midland, MI 48674 (US)
(72) Inventor: STOILJKOVIC, Aleksandar, 8810 Horgen (CH); PRIETO, Miguel A., 8810 Horgen (CH)
(74) Representative: Boult Wade Tennant LLP
(86) International application number: PCT/US2017/064144
(87) International publication number: WO 2018/102647

(56) References cited:
- US-A1- 2006 154 038
- US-A1- 2009 264 844

## Description

### Field of Disclosure

Embodiments of the present disclosure are directed towards multilayer films methods that may be utilized to form the multilayer films.

### Background

US 2009/264844 relates to laminates useful for incorporation into absorbent articles.

Films may be utilized for a number of applications including personal care articles such as diapers, training pants, adult incontinence products, and hygiene products, among others. There is a continued focus in the industry on developing new and improved films and/or methods that may be utilized to form multilayer films having one or more desirable properties. JP2003311884 discloses a multi-layer film.

### Summary

In the first aspect of the present invention, there is provided the multilayer film of claim 1, which comprises a first layer formed from 50 to 90 weight percent of a first layer polyolefinic elastomer and from 10 to 50 weight percent of a first layer polystyrene based upon a total weight of the first layer, a second layer formed from 70 to 100 weight percent of a second layer polyolefinic elastomer and from 0 to 30 weight percent of a second layer polystyrene based upon a total weight of the second layer; and a third layer formed from 50 to 90 weight percent of a third layer polyolefinic elastomer and from 10 to 50 weight percent of a third layer polystyrene based upon a total weight of the third layer, wherein the first layer is adjacent to the second layer and the second layer is adjacent to the third layer.
In a further aspect of the invention, there is provided the method of claim 10, for forming a multilayer film as described herein.

### Detailed Description

Multilayer films having one or more desirable properties and methods that may be utilized to form the multilayer films are disclosed herein. As mentioned, the multilayer films disclosed herein have one or more desirable properties. For example, the multilayer films may have improved blocking, as compared to other films.

Blocking is an adhesion between two contacting portions, e.g., sheets, of a film. While not wishing to be bound to theory, blocking may result due to Van der Waal's forces between the two contacting portions of the film and/or the presence of relatively lower molecular weight components of the film migrating toward the film surface. For a number of applications, blocking may be an undesirable film property, as the blocking can result in increased friction between the two contacting portions.

Some previous films have utilized antiblock additives and/or slip agents to reduce blocking. However, these antiblock additives and/or slip agents may settle into the bulk of the film, thus reducing their effectiveness. Additionally, utilizing these antiblock additives and/or slip agents may result one or more undesirable properties, such as a reduced force, e.g., force at 5% elongation, or a reduced peel force, among others.

Multilayer films are disclosed herein. Embodiments of the present disclosure provide that the multilayer films include a core layer. The core layer may be adjacent a first skin layer and a second skin layer. For instance, the core layer may be formed between, e.g., contacting, the first and second skin layers. In other words, the multilayer film may be an A₁BA₂ construction, where the A layers correspond to the skin layers and the B layer corresponds to the core layer. The A layers may comprise the same composition. However, one or more embodiments provide that the A layers are not compositionally the same, i.e. A₁ may have a composition differencing from A₂.

The core layer can include from 70 to 100 weight percent (wt%) of the polyolefinic elastomer based upon a total weight of the core layer. All individual values and subranges from 70 wt% to 100 wt% are included; for example, the core layer can include the polyolefinic elastomer from a lower limit of 70, 72.5, 75, 77.5, or 80 wt% to an upper limit of 100, 99.5, 99, 97, or 95 wt% based upon the total weight of the core layer.

The core layer can include from 0 wt% to 30 wt% of the polystyrene based upon a total weight of the core layer. All individual values and subranges from 0 wt% to 30 wt% are included; for example, core layer can include the polystyrene from a lower limit of 0, 0.5, 1, 3, or 5 wt% to an upper limit of 30, 27.5, 25, 22.5, or 20 wt% based upon the total weight of the core layer.

The core layer can be from 70 wt% to 90 wt% of the multilayer film based upon a total weight of the multilayer film. All individual values and subranges from 70 wt% to 90 wt% are included; for example, the core layer can be from a lower limit of 70, 71, 72, 73, 74, or 75 wt% to an upper limit of 90, 89, 88, 87, 86 or 85 wt% based upon the total weight of the of the multilayer film.

The core layer can have a thickness from 15 microns to 60 microns. All individual values and subranges from 15 microns to 60 microns are included; for example, the core layer can be from a lower limit of 15, 17.5, 20, 22.5, or 25 microns to an upper limit of 60, 57.5, 55, 52.5, or 50 microns.

Each skin layer can each respectively include from 50 wt% to 90 wt% of the polyolefinic elastomer based upon a total weight of the respective skin layer. All individual values and subranges from 50 wt% to 90 wt% are included; for example, a skin layer can include the polyolefinic elastomer from a lower limit of 50, 52.5, 55, 57.5, or 60 wt% to an upper limit of 90, 89.5, 89, 87, or 85 wt% based upon the total weight of the skin layer.

Each skin layer can each respectively include from 10 wt% to 50 wt% of the polystyrene based upon a total weight of the respective skin layer. All individual values and subranges from 10 wt% to 50 wt% are included; for example, a skin layer can include the polystyrene from a lower limit of 10, 10.5, 11, 13, or 15 wt% to an upper limit of 50, 47.5, 45, 42.5, or 40 wt% based upon the total weight of the skin layer.

As mentioned, each skin layer can each respectively include from 50 wt% to 90 wt% of the polyolefinic elastomer and from 10 wt% to 50 wt% of the polystyrene based upon a total weight of the respective skin layer. Embodiments of the present disclosure provide that a dispersed polystyrene phase can be formed within a matrix formed by the polyolefinic elastomer. As such, during extrusion the polystyrene domains can be highly elongated and help provide for a very high surface to volume ratio of polystyrene within the matrix formed by the polyolefinic elastomer. The polystyrene domains on the surface of the multilayer film can help reduce blocking. Additionally, the polystyrene domains can increase surface roughness, which may also reduce blocking. Further, the highly elongated polystyrene domains may provide improved stiffening in a machine direction of the multilayer film, which may be desirable for a number of applications, e.g., elastic films laminated offline.

Advantageously, the skin layers disclosed herein can provide reduced wrinkling and/or reduced microtexturing of the film surface, as compared to other films.

Each skin layer can each respectively be from 5 wt% to 15 wt% of the multilayer film based upon a total weight of the multilayer film. All individual values and subranges from 5 wt% to 15 wt% are included; for example, a skin layer can be from a lower limit of 5, 5.5, 6, 6.5, 7, or 7.5 wt% to an upper limit of 15, 14.5, 14, 13.5, 13 or 12.5 wt% based upon the total weight of the of the multilayer film.

Each skin layer can each respectively have a thickness from 1 microns to 10 microns. All individual values and subranges from 1 microns to 10 microns are included; for example, a skin layer can be from a lower limit of 1, 1.5, 1.75, 2, or 2.5 microns to an upper limit of 10, 9.5, 9, 8.5, or 8 microns.

The multilayer film can have a thickness from 17 microns to 80 microns. All individual values and subranges from 17 microns to 80 microns are included; for example, the multilayer film can be from a lower limit of 17, 20.5, 24, 26.5, or 30 microns to an upper limit of 80, 76.5, 73, 69.5, or 66 microns.

As mentioned, the core layer and the skin layers each respectively include a polyolefinic elastomer.

As used herein, an "polyolefinic" refers to an olefinic polymer. As used herein an "olefin," which may be referred to as an "alkene," refers to a linear, branched, or cyclic compound including carbon and hydrogen and having at least one double bond. As used herein, when a polymer or copolymer, e.g., the polyolefinic elastomer, is referred to as comprising, e.g., being formed from, an olefin, the olefin present in such polymer or copolymer is the polymerized form of the olefin. For example, if the polyolefinic elastomer is said to have an ethylene content of 75 wt% to 85 wt%, it is understood that the polymer unit in the polyolefinic elastomer is derived from ethylene in the polymerization reaction and the derived units are present at 75 wt% to 85 wt%, based upon the total weight of the polyolefinic elastomer.

As used herein a "polymer" has two or more of the same or different polymer units derived from one or more different monomers, e.g., homopolymers, copolymers, terpolymers. A "homopolymer" is a polymer having polymer units that are the same. A "copolymer" is a polymer having two or more polymer units that are different from each other. A "terpolymer" is a polymer having three polymer units that are different from each other. "Interpolymer" refers to a polymer prepared by the polymerization of at least two different types of monomers. The generic term "interpolymer" includes the term "copolymer", which generally refers to a polymer prepared from two different monomers, as well as the term "terpolymer", which generally refers to a polymer prepared from three different types of monomers. "Different" in reference to polymer units indicates that the polymer units differ from each other by at least one atom or are different isomerically. Accordingly, the definition of copolymer, as used herein, includes terpolymers.

As used herein, an "elastomer" refers to a material that will substantially resume its original shape after being stretched. For instance, upon application of a stretching force, an elastomer is stretchable in at least one direction, such as the cross machine direction, and which upon release of the stretching force contracts/returns to approximately its original dimension. For example, a stretched material having a stretched length which is at least 50 percent greater than its relaxed unstretched length, and which will recover to within at least 50 percent of its stretched length upon release of the stretching force. A hypothetical example would be a one (1) inch sample of a material which is stretchable to at least 1.50 inches and which, upon release of the stretching force, will recover to a length of not more than 1.25 inches.

The polyolefinic elastomer is an olefin-based elastomer. The polyolefinic elastomer can be an olefin block copolymer, such as an ethylene/alpha-olefin interpolymer, or a propylene/alpha-olefin copolymer, for instance.

Examples of the polyolefinic elastomer include olefin block copolymers, which are elastomeric copolymers of polyethylene, e.g., polyethylene based polyolefinic elastomers. Polyethylene based polyolefinic elastomers are available under the trade name INFUSE™, among others.

Other examples of the polyolefinic elastomer include copolymers of polypropylene, which may be referred to as polypropylene based polyolefinic elastomers. Polypropylene based polyolefinic elastomers are available under the trade names VERSIFY™, NOTIO™, and VISTAMAXX™, among others.

The term "ethylene/alpha olefin interpolymer" refers to polymers comprising ethylene and an alpha-olefin having 3 or more carbon atoms. The ethylene may comprise the majority mole fraction of the ethylene/alpha olefin interpolymer, i.e., the ethylene can comprise at least about 50 mole percent, at least about 60 mole percent, at least about 70 mole percent, at least about 80 mole percent, or at least about 90 mole percent of the ethylene/alpha olefin interpolymer, with the remainder of the ethylene/alpha olefin interpolymer comprising at least one other comonomer, e.g., an alpha-olefin having 3 or more carbon atoms.

The term "propylene/alpha olefin interpolymer" refers to polymers comprising propylene and an alpha-olefin having other than 3 carbon atoms. The propylene/alpha-olefin copolymer comprises units derived from propylene and polymeric units derived from one or more alpha-olefin comonomers. Examples of such comonomers include C₂, and C₄ to C₁₀ alpha-olefins; for example, C₂, C₄, C₆ and C₈ alpha-olefins. The propylene/alpha-olefin copolymer may comprise from 1 to 40 wt% of units derived from one or more of the alpha-olefin comonomers. All individual values and subranges from 1 to 40 wt% are included herein and disclosed herein; for example, the wt% of units derived from one or more alpha-olefin comonomers can be from a lower limit of 1, 3, 4, 5, 7, or 9 wt% to an upper limit of 40, 35, 30, 27, 20, 15, 12, or 9 wt% based upon a total weight of the propylene/alpha-olefin copolymer. For instance, the propylene/alpha-olefin copolymer may comprise from 1 to 35 wt%of units derived from one or more alpha-olefin comonomers; from 1 to 30 wt% of units derived from one or more alpha-olefin comonomers; from 3 to 27 wt% of units derived from one or more alpha-olefin comonomers; from 3 to 20 wt% of units derived from one or more alpha-olefin comonomers; or from 3 to 15 wt% of units derived from one or more alpha-olefin comonomers. In some embodiments, the propylene/alpha-olefin copolymers may be characterized as comprising (A) at least 50 between 60 and less than 100, between 80 and 99, and between 85 and 99 wt% of units derived from propylene, and (B) between greater than zero and 50, between greater than zero and 40, between 1 and 20, between 5 and 20, and between 7 and 20, wt% of units derived from at least one of ethylene and/or a C₄-C₁₀ alpha-olefin.

The polyolefinic elastomer can comprise ethylene and/or propylene and one or more copolymerizable alpha-olefin comonomers in polymerized form, characterized by multiple blocks or segments of two or more polymerized monomer units differing in chemical or physical properties. That is, the polyolefinic elastomers are block interpolymers, or "olefin block copolymers". The polyolefinic elastomers can be multi-block interpolymers. In one or more embodiments, the multi-block interpolymer can be represented by the following formula: (AB)ₙ where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In one or more embodiments, A blocks and B blocks are randomly distributed along the polymer chain. In other words, the block copolymers usually do not have a structure as follows: AAA-AA-BBB-BB. In one or more embodiments, the block copolymers do not have a third type of block, which comprises different comonomer(s). In one or more embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The polyolefinic elastomers can include various amounts of "hard" and "soft" segments. "Hard" segments refer to blocks of polymerized units in which ethylene is present in an amount greater than about 95 wt%, and preferably greater than about 98 wt% based on the weight of the polymer. In other words, the comonomer content, i.e. the content of monomers other than ethylene, in the hard segments is less than about 5 wt%, and preferably less than about 2 wt% based on the weight of the polymer. In one or more embodiments, the hard segments comprise all or substantially all ethylene. "Soft" segments, on the other hand, refer to blocks of polymerized units in which the comonomer content, i.e., the content of monomers other than ethylene, is greater than about 5 wt%, preferably greater than about 8 wt%, greater than about 10 wt%, or greater than about 15 wt% based on the weight of the polymer. Embodiments of the present disclosure provide, the comonomer content in the soft segments can be greater than about 20 wt%, greater than about 25 wt%, greater than about 30 wt%, greater than about 35 wt%, greater than about 40 wt%, greater than about 45 wt%, greater than about 50 wt%, or greater than about 60 wt%.

The soft segments can often be present in the polyolefinic elastomer from about 1 wt% to about 99 wt% of a total weight of the polyolefinic elastomer. For example, the soft segments can often be present in the polyolefinic elastomer from about 5 wt% to about 95 wt%, from about 10 wt% to about 90 wt%, from about 15 wt% to about 85 wt%, from about 20 wt% to about 80 wt%, from about 25 wt% to about 75 wt%, from about 30 wt% to about 70 wt%, from about 35 wt% to about 65 wt%, from about 40 wt% to about 60 wt%, or from about 45 wt% to about 55 wt% of the total weight of the polyolefinic elastomer. Conversely, the hard segments can be present in similar ranges. The soft segment weight percentage and the hard segment weight percentage can be calculated based on data obtained from DSC or NMR. Such methods and calculations are disclosed in U.S. Patent Application Publication Ser. No. 2006-0199930A1.

Examples of olefin monomers and/or comonomers that may be utilized to form the polyolefinic elastomers include ethylene, propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, C₄-C₄₀ dienes, including 1,3-butadiene, 1,3-pentadiene, 1,4-hexadiene, 1,5-hexadiene, 1,7-octadiene, 1,9-decadiene, and other C₄-C₄₀ alpha-olefins. Comonomer content of the polyolefinic elastomers may be measured using any suitable technique, such as techniques based on nuclear magnetic resonance ("NMR") spectroscopy, and, for example, by ¹³C NMR analysis as described in U.S. Patent 7,498,282. Propylene/alpha-olefin copolymers are further described in U.S. Patent Nos. 6,960,635 and 6,525,157.

The polyolefinic elastomers can have a melt flow rate in the range of from 0.1 to 50 g/10 minutes, measured in accordance with ASTM D-1238 (at 230 °C/2.16 Kg). All individual values and subranges from 0.1 to 50 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 50 g/10 minutes, 45 g/10 minutes, 40 g/10 minutes, 35 g/10 minutes, 30 g/10 minutes, 25 g/10 minutes, 20 g/10 minutes, 18 g/10 minutes, 15 g/10 minutes, 10 g/10 minutes, 8 g/10 minutes, or 5 g/10 minutes. In some embodiments, the polyolefinic elastomers may have a melt flow rate in the range of from 0.1 to 30 g/10 minutes; from 0.1 to 25 g/10 minutes; from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes.

In some embodiments, the polyolefinic elastomers may have a molecular weight distribution (MWD), defined as weight average molecular weight divided by number average molecular weight (Mw/Mn) of 3.5 or less; in the alternative 3.0 or less; or in another alternative from 1.8 to 3.0. In other embodiments, the polyolefinic elastomers may have a MWD from about 1 to about 40, from about 1 to about 15, or from about 1.8 to about 5. In some embodiments, the propylene-based elastomer may exhibit a bimodal molecular weight distribution. Techniques for determining the molecular weight (Mn and Mw) and MWD may be found in U.S. Pat. No. 4,540,753 (Cozewith, Ju and Ver Strate), which is incorporated by reference herein, and in Macromolecules, 1988, Vol. 21, p. 3360-3371 (Ver Strate et al.).

In some embodiments, the polyolefinic elastomers may have a crystallinity in the range of from at least 0.5 percent by weight (a heat of fusion of at least 0.75 Joules/gram) to 40 percent by weight (at heat of fusion less than 76 Joules/gram). All individual values and subranges from 0.5 percent by weight (a heat of fusion of at least 0.75 Joules/gram) to 40 percent by weight (a heat of fusion of less than 76 Joules/gram) are included herein and disclosed herein; for example, the crystallinity can be from a lower limit of 0.5 percent by weight (a heat of fusion of at least 0.75 Joules/gram), 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 40 percent by weight (a heat of fusion of less than 76 Joules/gram), 35 percent by weight (a heat of fusion of less than 67 Joules/gram), 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). In some embodiments, the polyolefinic elastomers may have a crystallinity in the range of from at least 1 percent by weight (a heat of fusion of at least 2 Joules/gram) to 24 percent by weight (a heat of fusion of less than 40 Joules/gram); or in the alternative, the polyolefinic elastomers may have a crystallinity in the range of from at least 1 percent by weight (a heat of fusion of at least 2 Joules/gram) to 15 percent by weight (a heat of fusion of less than 24.8 Joules/gram); or in the alternative, the polyolefinic elastomers may have a crystallinity in the range of from at least 1 percent by weight (a heat of fusion of at least 2 Joules/gram) to 7 percent by weight (a heat of fusion of less than 11 Joules/gram); or in the alternative, the polyolefinic elastomers may have a crystallinity in the range of from at least 1 percent by weight (a heat of fusion of at least 2 Joules/gram) to 5 percent by weight (a heat of fusion of less than 8.3 Joules/gram). The crystallinity may be measured via differential scanning calorimetry (DSC) method.

In some embodiments, the polyolefinic elastomers may have a molecular weight distribution (MWD), defined as weight average molecular weight divided by number average molecular weight (Mw/Mn) of 3.5 or less; in the alternative 3.0 or less; or in another alternative from 1.8 to 3.0. In other embodiments, the polyolefinic elastomers may have a MWD from about 1 to about 40, from about 1 to about 15, or from about 1.8 to about 5. In some embodiments, the polyolefinic elastomers may exhibit a bimodal molecular weight distribution. Techniques for determining the molecular weight (Mn and Mw) and MWD may be found in U.S. Pat. No. 4,540,753 (Cozewith, Ju and Ver Strate), and in Macromolecules, 1988, Vol. 21, p. 3360-3371 (Ver Strate et al.).

In one embodiment, the polyolefinic elastomers may comprise an average of at least 0.001, at least 0.005, or at least 0.01, long chain branches/1000 total carbons, wherein the term long chain branch, as used herein with regards to polyolefinic elastomers, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. The maximum number of long chain branches typically does not exceed 3 long chain branches/1000 total carbons. Such propylene-based elastomers are further described in details in the U.S. Provisional Patent Application No. 60/988,999 and International Patent Application No. PCT/US08/082599.

The polyolefinic elastomers can be formed utilizing known polymerization processes. Known polymerization processes are discussed, among others, in PCT Application No. PCT/US2005/008916; PCT Application No. PCT/US2005/008915; and PCT Application No. PCT/US2005/008917.

As an example, one such known polymerization process includes contacting ethylene and/or propylene and optionally one or more addition polymerizable monomers other than ethylene under addition polymerization conditions with a catalyst. Examples of the catalyst include [N-(2,6-di(1-methylethyl)phenyl)amido)(2-isopropylphenyl)(α-naphthalen-2-diyl(6-pyridin-2-diyl)methane)]hafnium dimethyl; [N-(2,6-di(1-methylethyl)phenyl)amido)(2-methylphenyl)(1,2-phenylene-(6-pyridin-2-diyl)methane)]hafnium dimethyl; bis[N,N'"-(2,4,6-tri(methylphenyl)amido)ethylenediamine]hafnium dibenzyl; bis((2-oxoyl-3-(dibenzo-1H-pyrrole-1-yl)-5-(methyl)phenyl)-2-phenoxymethyl)cyclohexane-1,2-diyl zirconium (IV) dibenzyl; 1,2-bis-(3,5-di-t-butylphenylene)(1-(N-(1-methylethyl)immino)methyl)(2-oxoyl) zirconium dibenzyl; 1,2-bis-(3,5-di-t-butylphenylene)(1-(N-(2-methylcyclohexyl)-immino)methyl)(2-oxoyl) zirconium dibenzyl; (t-butylamido)dimethyl(3-N-pyrrolyl-1,2,3,3a,7a-η-inden-1-yl)silanetitanium dimethyl; (t-butylamido)di(4-methylphenyl)(2-methyl-1,2,3,3a,7a-η-inden-1-yl)silanetitanium dimethyl; (t-butylamido)di(4-methylphenyl)(2-methyl-1,2,3,3a,8a-η-s-indacen-1-yl)silanetitanium dimethyl; bis(dimethyldisiloxane)(indene-1-yl)zirconium dichloride; and combinations thereof, among others.

One or more embodiments provides that a shuttling agent may be utilized to form the polyolefinic elastomers. Examples of shuttling agents include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis (2,3,6,7-dibenzo-1-azacycloheptaneamide), n-octylaluminum bis(dimethyl(t-butyl)siloxide, ethylzinc (2,6-diphenylphenoxide), ethylzinc (t-butoxide), and combinations thereof, among others.

As mentioned, the core layer and the skin layers each respectively include a polystyrene. As used herein "polystyrene" refers to styrenic polymers. Examples of styrenic polymers include polystyrene, rubber modified polystyrene (high impact polystyrene), styrene/acrylonitrile copolymers (SAN), rubber modified SAN (acrylonitrile butadiene styrene or acrylonitrile ethylene styrene) and styrene maleic anhydride copolymers.

The polystyrene can be formed by polymerizing a vinyl aromatic monomer. Examples of the vinyl aromatic monomer include styrene, alkyl or aryl ring-substituted styrenes, such as para-methylstyrene, para-tertiary-butylstyrene, p-phenylstyrene, and combiantions thereof, among others. Crosslinking agents, such as divinyl aromatic compounds, may be utilized in forming the polystyrene.

The polystyrene can be formed utilizing known polymerization processes. For instance, the vinyl aromatic monomers may be polymerized by a process including free radical or ionic initiated polymerization. An example of a sutiable process is anionic polymerization by use of known alkyl or aryl metal initiators. Suitable initiators include alkyllithium compounds such as n-butyl lithium, n-pentyl lithium, and other alkyl lithium compounds, sodium naphthalene, and potassium naphthalene, among others. Polymerization rates may be moderated and/or accelerated by the addition of certain additives such as polar compounds including ethers such as crown ethers, tertiary amines, and other adjuvants.

One or more embodiments of the present disclosure provide that the polystyrene is a high impact polystyrene, i.e. the vinyl aromatic monomers discussed herein are polymerized in the presence of at least one rubber. Suitable rubbers include diene rubbers, diene block rubbers, butyl rubbers, ethylene propylene rubbers, ethylenepropylene-diene monomer (EPDM) rubbers, ethylene copolymer rubbers, acrylate rubbers, polyisoprene rubbers, halogen-containing rubbers, silicone rubbers, and combinations thereof. Also suitable are interpolymers of rubber-forming monomers with other copolymerizable monomers. Suitable diene rubbers include polymers of conjugated 1,3-dienes, for example, butadiene, isoprene, piperylene, chloroprene, or mixtures of two or more of these dienes. Suitable rubbers also include homopolymers of conjugated 1,3-dienes and interpolymers or copolymers of conjugated 1,3-dienes with one or more copolymerizable monoethylenically unsaturated monomers, for example, such homopolymers or copolymers of butadiene or isoprene, with 1,3-butadiene homo- or copolymers being especially preferred. Such rubbers also include mixtures of any of these 1,3-diene rubbers. Other rubbers include homopolymers of 1,3-butadiene and include copolymers of 1,3-butadiene with one or more copolymerizable monomers, such as the vinyl aromatic monomers discussed. The copolymers of 1,3-butadiene can be random, block or tapered block rubbers of at least about 30, at least about 50, at least about 70, or at least about 90, wt % 1,3-butadiene, and up to about 70, up to about 50, up to about 30, or up to about 10, wt % vinyl aromatic monomer, based on the weight of the 1,3-butadiene copolymer.

The high impact polystyrene can have a rubber content from 1 wt% to 60 wt% based upon a total weight of the high impact polystyrene. All individual values and subranges from 1 wt% to 60 wt% are included; for example, the high impact polystyrene can have a rubber content from a lower limit of 1, 2, 3, 4, or 5 wt% to an upper limit of 60, 57.5, 55, 52.5, or 50 wt% based upon the total weight of the high impact polystyrene.

The rubber may be particulate and have a volume average diameter from 0.1 micron to 10 microns. All individual values and subranges from 0.1 micron to 10 microns are included; for example, the rubber can have a volume average diameter from a lower limit of 0.1, 0.5, or 1 micron to an upper limit of 10, 9, or 8 microns. As used herein, the "volume average diameter" refers to the diameter of the rubber particles, including all occlusions of vinyl aromatic monomers within the rubber particles. These particle sizes can be determined using light scattering based equipment, e.g., Coulter LS230, and/or transmission electron microscopy image analysis. Average particle diameter and other rubber particle statistics and percentages can be measured with the Beckham Coulter: LS230 light scattering instrument and software, among others.

The core layer and/or the skin layers can each respectively include an additive. Examples of additives include viscosity reducing polymers, plasticizers, tackifiers, dyes, pigments, antioxidants, antistatic agents, bonding aids, heat stabilizers, photostabilizers, foaming agents, glass bubbles, starch, metal salts, microfibers, or combinations thereof, among others. Differing amounts additive may be utilized for various applications.

Embodiments of the present disclosure provide that the multilayer films disclosed herein may be formed by a variety of processes. For instance, the multilayer films may be formed by a blown film process or a cast film process.

Blown film processes may utilize an extruder to heat, melt, and convey the components of the multilayer film to a die. Each layer of the multilayer film may have corresponding stream introduced to the die. Generally, extrusion temperatures are from 150 °C to 275 °C. The components of the multilayer film can be drawn from the die, formed into a tube shape, and passed through a pair of draw or nip rollers. Internal compressed air can then introduced from a mandrel causing the tube to increase in diameter forming a "bubble" of the desired size. Thus, the blown film can be stretched in two directions, namely in an axial direction, by the use of forced air which "blows out" the diameter of the bubble, and in a lengthwise direction of the bubble, by the action of a winding element which pulls the bubble through the machinery. External air can also be introduced around the bubble circumference to cool the melt as it exits the die. Film width can be varied by introducing more or less internal air into the bubble thus increasing or decreasing the bubble size. Film thickness can be controlled by increasing or decreasing the speed of the draw roll or nip roll to control the draw-down rate. The bubble can be collapsed after passing through the draw or nip rolls. The cooled film can then be processed further by cutting or sealing to produce a variety of consumer products.

For a cast film process, components of the multilayer film can be extruded onto a turning roll, where the multilayer film is quenched on one side by the roll. The speed of the roller may be used to control the draw ratio and final film thickness. The multilayer film can then be sent to a second roller for cooling on the other side.

One or more embodiments of the present disclosure provide that the multilayer films disclosed herein may be utilized for a number of other applications, such as an extrusion coating process or an extrusion lamination process, among others. For an extrusion coating process, components of the multilayer film can be applied to a moving substrate such as to produce a coated substrate. For an extrusion lamination process, components of the multilayer film can be applied to two or more moving substrates to be joined together.

As mentioned, the multilayer films disclosed herein may advantageously have improved blocking, as compared to other films. Additionally, the multilayer films may advantageously have an improved force, e.g., force at 5% elongation, in the cross direction and/or the machine direction. Further, the multilayer films may advantageously have an improved machinability parameter, e.g., a ratio of the force machine direction to the force cross direction, may be desirable for a number of applications, e.g., such as lamination, where less elongation in the machine direction may be desirable. Also, the multilayer films may advantageously have an improved peel force, as compared to other films.

### EXAMPLES

In the Examples, various terms and designations for materials are used including, for instance, the following:

Granic 421 (Calcium Carbonate masterbatch (73% CaCO₃ in LLDPE) commercially available from Granic Group (Tarragona Spain)); POLYBATCH™ FSU-105-E (slip and antiblock masterbatch (5% erucamide as a slip agent, 10% silica as antiblock agent) commercially available from Schulmann); STYRON A-TECH™ 1200 (high-impact polystyrene containing approximately 8 weight percent of polybutadiene rubber, density of 1.05 g/cm³ (ISO 1388), mass melt flow of 5 g/10 min (200 °C, 5 kg, ISO 1133) commercially available from TRINSEO); polyolefinic elastomer I (VERSIFY™ 3300, polypropylene based polyolefinic elastomer available from The Dow Chemical Company); polyolefinic elastomer II (INFUSE™ 9107, polyethylene based polyolefinic elastomer available from The Dow Chemical Company).

Example 1, a multilayer film, was formed as follows. Polyolefinic elastomer I, polyolefinic elastomer II, and STYRON A-TECH™ 1200 were fed to a Dr. COLLIN cast film line equipped with 25 mm extruders and run at: layer ratio of 10%/80%/10%; throughput of 7 kg/hr; take speed of 10 m/min; die gap 0.88 mm; and melt temperature of approximately 220 C to provide Example 1. Example 1 included: a core layer formed from polyolefinic elastomer II (95 wt%) and STYRON A-TECH™ 1200 (5 wt%); and two skin layers, each formed respectively from polyolefinic elastomer I (70 wt%) and STYRON A-TECH™ 1200 (30 wt%). Example 1 had a total thickness of 50 microns, where the core layer was 80% of the total thickness of Example 1 and the two skin layers were each respectively 10% of the total thickness Example 1, such that the skin layers combined were 20% of the total thickness of Example 1.

Comparative Example A was formed as Example I the changes: the core layer was formed from polyolefinic elastomer II (98 wt%) and POLYBATCH™ FSU-105-E (2 wt%); the two skin layers were each formed respectively from polyolefinic elastomer II (75 wt%), Granic 421 (22 wt%), and POLYBATCH™ FSU-105-E (3 wt%).

Blocking was determined by utilizing fifty meter rolls of Example 1 and Comparative Example A. The respective rolls were unwound the associated forces were measured. Rolls formed 1 week and 12 weeks after extrusion of Example 1 and Comparative Example A were respectively tested. Each of the rolls were 195 mm wide, and were unwound at 10 m/min. Force per 50 mm length (reported as newtons per 50 mm (N/50mm)) was measured after 10, 20, 30, 40, and 50 meters of unwound films. The results are reported in Table 1.

**Table 1**

| | Rolls formed from Example 1 | | Rolls formed from Comparative Example A | |
|---|---|---|---|---|
| | 1 week after extrusion | 12 weeks after extrusion | 1 week after extrusion | 12 weeks after extrusion |
| at 10 m unwound | 0.9 N/50 mm | 0.9 N/50 mm | 3.2 N/50 mm | 3.1 N/50 mm |
| at 20 m unwound | 1.1 N/50 mm | 1.2 N/50 mm | 5.7 N/50 mm | 9.7 N/50 mm |
| at 30 m unwound | 1.5 N/50 mm | 1.4 N/50 mm | 8.1 N/50 mm | break |
| at 40 m unwound | 2.0 N/50 mm | 1.7 N/50 mm | 10.8 N/50 mm | n/a |
| at 50 m unwound | 1.8 N/50 mm | 2.1 N/50 mm | 12.8 N/50 mm | n/a |

The data of Table 1 illustrates that rolls of film formed from Example 1 have an improved, i.e., lower, blocking as indicated by the corresponding forces, as compared to the rolls of film formed from Comparative Example A, for both one week after extrusion and for twelve weeks after extrusion.

Additionally, the data of Table 1 illustrates improved ageing of the rolls of film formed from Example 1 as compared to the film formed from Comparative Example A. As shown for the rolls formed twelve weeks after extrusion, as the roll of film formed from Example 1 was unwound, i.e., nearer to the center of the roll, the corresponding forces remained relatively consistent. In contrast, as the roll of film formed from Comparative Example A was unwound the corresponding forces increased notably nearer to the center of the roll.

For Example 1 and Comparative Example A forces at 5% elongation were determined a tensile test according to ISO 527-3. Tensile properties Example 1 and Comparative Example A films were measured on an Instron tensile tester according to ISO 527-3 using 15 mm wide strips with a 100 mm gauge length and a test speed of 500 mm/min. The results are reported in Table 2.

**Table 2**

| | Force at 5% elongation [Cross direction; N/25mm] | Force at 5% elongation [Machine direction; N/25mm] | Ratio [Force machine direction/ Force cross direction] |
|---|---|---|---|
| Example 1 | 1.10 | 2.60 | 2.3 |
| Comparative Example A | 0.70 | 0.60 | 0.9 |

The data of Table 2 illustrates that Example 1 has an improved force at 5% elongation in both the cross direction and the machine direction, as compared to Comparative Example A. Additionally, the data of Table 2 illustrates that Example 1 has an improved machinability parameter (force machine direction/ force cross direction), as compared to Comparative Example A. This machinability parameter may be desirable for a number of applications, e.g., such as lamination, where less elongation in the machine direction may be advantageous.

Peel forces were determined for Example 1 and Comparative Example A according to ISO 11339. Twenty-five mm wide portions of Example 1 and Comparative Example A were utilized with a 30 mm grip distance and a test speed of 300 mm/min. To prepare the respective tested materials, 6 grams of hot melt adhesive (LUNATACK® D7 142 available from H.G. Fuller) was applied to 24 grams of carded nonwoven material (Thermo Strain 24 Carded Thermobonded nonwoven available from Mondi Ascania) and then contacted with Example 1 or Comparative Example A with a JHT machine available from Nordson. Peel forces were determined 3 days after preparation, corresponding to no aging, and peel forces were determined after 30 days of aging in an oven maintained at 40°C. The results are reported in Table 3.

**Table 3**

| | Peel Force (no aging) | Peel Force (30-day aging) |
|---|---|---|
| Example 1 | 5.1 N/25 mm | 4.5 N/25 mm |
| Comparative Example A | No adhesion | No adhesion |

The data of Table 3 illustrates that Example 1 has an improved peel force for both the no aging test and the 30-day aging test, as compared to Comparative Example A. The improved peel force may be desirable for a number of applications, e.g., where improved adhesion may be advantageous.

## Claims

1. A multilayer film comprising:
a first layer formed from 50 to 90 weight percent of a first layer polyolefinic elastomer and from 10 to 50 weight percent of a first layer polystyrene based upon a total weight of the first layer;
a second layer formed from 70 to 100 weight percent of a second layer polyolefinic elastomer and from 0 to 30 weight percent of a second layer polystyrene based upon a total weight of the second layer; and
a third layer formed from 50 to 90 weight percent of a third layer polyolefinic elastomer and from 10 to 50 weight percent of a third layer polystyrene based upon a total weight of the third layer, wherein the first layer is adjacent to the second layer and the second layer is adjacent to the third layer.

2. The multilayer film of claim 1, wherein the first layer is from 5 to 15 weight percent of the multilayer film based upon a total weight of the multilayer film.

3. The multilayer film of claim 2, wherein the second layer is from 70 to 90 weight percent of the multilayer film based upon the total weight of the multilayer film.

4. The multilayer film of claim 3, wherein the third layer is from 5 to 15 weight percent of the multilayer film based upon the total weight of the multilayer film.

5. The multilayer film of any one of claims 1-4, wherein the first layer polyolefinic elastomer, the second layer polyolefinic elastomer, and the third layer polyolefinic are olefin block copolymers.

6. The multilayer film of any one of claims 1-5, wherein the first layer polystyrene, the second layer polystyrene, and the third layer polystyrene are high impact polystyrenes.

7. The multilayer film of any of any one of claims 1-6, wherein each of the first layer and the third has a thickness from 1 microns to 10 microns.

8. The multilayer film of any of any one of claims 1-7, wherein the second layer has a thickness from 15 microns to 60 microns.

9. The multilayer film of any one of claims 1-8, wherein the multilayer film has a thickness from 17 microns to 80 microns.

10. A method for forming a multilayer film comprising:
forming a first layer formed from 50 to 90 weight percent of a first layer polyolefinic elastomer and from 10 to 50 weight percent of a first layer polystyrene based upon a total weight of the first layer;
forming a second layer formed from 70 to 100 weight percent of a second layer polyolefinic elastomer and from 0 to 30 weight percent of a second layer polystyrene based upon a total weight of the second layer; and
forming a third layer formed from 50 to 90 weight percent of a third layer polyolefinic elastomer and from 10 to 50 weight percent of a third layer polystyrene based upon a total weight of the third layer, wherein the first layer is adjacent to the second layer and the second layer is adjacent to the third layer.

## Patentansprüche

1. Eine Mehrschichtfolie, beinhaltend:
eine erste Schicht, die, bezogen auf ein Gesamtgewicht der ersten Schicht, zu 50 bis 90 Gewichtsprozent aus einem Polyolefin-Elastomer der ersten Schicht und zu 10 bis 50 Gewichtsprozent aus einem Polystyrol der ersten Schicht gebildet ist;
eine zweite Schicht, die, bezogen auf ein Gesamtgewicht der zweiten Schicht, zu 70 bis 100 Gewichtsprozent aus einem Polyolefin-Elastomer der zweiten Schicht und zu 0 bis 30 Gewichtsprozent aus einem Polystyrol der zweiten Schicht gebildet ist; und
eine dritte Schicht, die, bezogen auf ein Gesamtgewicht der dritten Schicht, zu 50 bis 90 Gewichtsprozent aus einem Polyolefin-Elastomer der dritten Schicht und zu 10 bis 50 Gewichtsprozent aus einem Polystyrol der dritten Schicht gebildet ist, wobei die erste Schicht an die zweite Schicht angrenzt und die zweite Schicht an die dritte Schicht angrenzt.

2. Mehrschichtfolie gemäß Anspruch 1, wobei die erste Schicht, bezogen auf ein Gesamtgewicht der Mehrschichtfolie, 5 bis 15 Gewichtsprozent der Mehrschichtfolie beträgt.

3. Mehrschichtfolie gemäß Anspruch 2, wobei die zweite Schicht, bezogen auf das Gesamtgewicht der Mehrschichtfolie, 70 bis 90 Gewichtsprozent der Mehrschichtfolie beträgt.

4. Mehrschichtfolie gemäß Anspruch 3, wobei die dritte Schicht, bezogen auf das Gesamtgewicht der Mehrschichtfolie, 5 bis 15 Gewichtsprozent der Mehrschichtfolie beträgt.

5. Mehrschichtfolie gemäß einem der Ansprüche 1-4, wobei das Polyolefin-Elastomer der ersten Schicht, das Polyolefin-Elastomer der zweiten Schicht und das Polyolefin der dritten Schicht Olefinblockcopolymere sind.

6. Mehrschichtfolie gemäß einem der Ansprüche 1-5, wobei das Polystyrol der ersten Schicht, das Polystyrol der zweiten Schicht und das Polystyrol der dritten Schicht hochschlagfeste Polystyrole sind.

7. Mehrschichtfolie gemäß einem der Ansprüche 1-6, wobei jede der ersten und der dritten Schicht eine Dicke von 1 Mikrometer bis 10 Mikrometer aufweist.

8. Mehrschichtfolie gemäß einem der Ansprüche 1-7, wobei die zweite Schicht eine Dicke von 15 Mikrometer bis 60 Mikrometer aufweist.

9. Mehrschichtfolie gemäß einem der Ansprüche 1-8, wobei die Mehrschichtfolie eine Dicke von 17 Mikrometer bis 80 Mikrometer aufweist.

10. Ein Verfahren zum Bilden einer Mehrschichtfolie, beinhaltend:
Bilden einer ersten Schicht, die, bezogen auf ein Gesamtgewicht der ersten Schicht, zu 50 bis 90 Gewichtsprozent aus einem Polyolefin-Elastomer der ersten Schicht und zu 10 bis 50 Gewichtsprozent aus einem Polystyrol der ersten Schicht gebildet wird; Bilden einer zweiten Schicht, die, bezogen auf ein Gesamtgewicht der zweiten Schicht, zu 70 bis 100 Gewichtsprozent aus einem Polyolefin-Elastomer der zweiten Schicht und zu 0 bis 30 Gewichtsprozent aus einem Polystyrol der zweiten Schicht gebildet wird; und
Bilden einer dritten Schicht, die, bezogen auf ein Gesamtgewicht der dritten Schicht, zu 50 bis 90 Gewichtsprozent aus einem Polyolefin-Elastomer der dritten Schicht und zu 10 bis 50 Gewichtsprozent aus einem Polystyrol der dritten Schicht gebildet wird, wobei die erste Schicht an die zweite Schicht angrenzt und die zweite Schicht an die dritte Schicht angrenzt.

## Revendications

1. Un film multicouche comprenant :
une première couche formée à partir de 50 à 90 pour cent en poids d'un élastomère polyoléfinique de première couche et à partir de 10 à 50 pour cent en poids d'un polystyrène de première couche rapporté à un poids total de la première couche ;
une deuxième couche formée à partir de 70 à 100 pour cent en poids d'un élastomère polyoléfinique de deuxième couche et à partir de 0 à 30 pour cent en poids d'un polystyrène de deuxième couche rapporté à un poids total de la deuxième couche ; et
une troisième couche formée à partir de 50 à 90 pour cent en poids d'un élastomère polyoléfinique de troisième couche et à partir de 10 à 50 pour cent en poids d'un polystyrène de troisième couche rapporté à un poids total de la troisième couche, dans lequel la première couche est adjacente à la deuxième couche et la deuxième couche est adjacente à la troisième couche.

2. Le film multicouche de la revendication 1, dans lequel la première couche représente de 5 à 15 pour cent en poids du film multicouche rapporté à un poids total du film multicouche.

3. Le film multicouche de la revendication 2, dans lequel la deuxième couche représente de 70 à 90 pour cent en poids du film multicouche rapporté au poids total du film multicouche.

4. Le film multicouche de la revendication 3, dans lequel la troisième couche représente de 5 à 15 pour cent en poids du film multicouche rapporté au poids total du film multicouche.

5. Le film multicouche de n'importe laquelle des revendications 1 à 4, dans lequel l'élastomère polyoléfinique de première couche, l'élastomère polyoléfinique de deuxième couche, et le polyoléfinique de troisième couche sont des copolymères à blocs d'oléfines.

6. Le film multicouche de n'importe laquelle des revendications 1 à 5, dans lequel le polystyrène de première couche, le polystyrène de deuxième couche, et le polystyrène de troisième couche sont des polystyrènes à haute résistance aux chocs.

7. Le film multicouche de n'importe laquelle des revendications 1 à 6, dans lequel la première couche et la troisième ont chacune une épaisseur allant de 1 micron à 10 microns.

8. Le film multicouche de n'importe laquelle des revendications 1 à 7, dans lequel la deuxième couche a une épaisseur allant de 15 microns à 60 microns.

9. Le film multicouche de n'importe laquelle des revendications 1 à 8, dans lequel le film multicouche a une épaisseur allant de 17 microns à 80 microns.

10. Un procédé pour former un film multicouche comprenant :
la formation d'une première couche formée à partir de 50 à 90 pour cent en poids d'un élastomère polyoléfinique de première couche et à partir de 10 à 50 pour cent en poids d'un polystyrène de première couche rapporté à un poids total de la première couche ;
la formation d'une deuxième couche formée à partir de 70 à 100 pour cent en poids d'un élastomère polyoléfinique de deuxième couche et à partir de 0 à 30 pour cent en poids d'un polystyrène de deuxième couche rapporté à un poids total de la deuxième couche ; et
la formation d'une troisième couche formée à partir de 50 à 90 pour cent en poids d'un élastomère polyoléfinique de troisième couche et à partir de 10 à 50 pour cent en poids d'un polystyrène de troisième couche rapporté à un poids total de la troisième couche, dans lequel la première couche est adjacente à la deuxième couche et la deuxième couche est adjacente à la troisième couche.
